(19) **Europäisches Patentamt / European Patent Office / Office européen des brevets**

(11) **EP 3 657 294 B1**

(12) **FASCICULE DE BREVET EUROPEEN**

(45) Date de publication et mention de la délivrance du brevet:
**29.06.2022 Bulletin 2022/26**

(21) Numéro de dépôt: **20151750.5**

(22) Date de dépôt: **30.06.2016**

(51) Classification Internationale des Brevets (IPC):
**G05D 3/10** *(2006.01)*   **G01S 3/786** *(2006.01)*
**H02S 20/32** *(2014.01)*

(52) Classification Coopérative des Brevets (CPC):
**G01S 3/7861; F24S 50/20; G05D 3/105; H02S 20/10; H02S 20/32; H02S 40/20; H02S 50/00;** F24S 2201/00; Y02E 10/47; Y02E 10/50

(54) **PROCÉDÉ DE PILOTAGE DE L'ORIENTATION D'UN SUIVEUR SOLAIRE BASÉ SUR DES MODÈLES CARTOGRAPHIQUES**

STEUERUNGSVERFAHREN DER AUSRICHTUNG EINER SOLARNACHFÜHRUNG, DAS AUF KARTOGRAFISCHEN MODELLEN BASIERT

METHOD FOR CONTROLLING THE ORIENTATION OF A SOLAR TRACKER BASED ON CARTOGRAPHIC MODELS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.07.2015 FR 1556228**

(43) Date de publication de la demande:
**27.05.2020 Bulletin 2020/22**

(62) Numéro(s) de document de la (des) demande(s) initiale(s) en application de l'article 76 CBE:
**16742356.5 / 3 317 736**

(73) Titulaire: **NEXTracker, Inc.**
**Fremont, California 94555 (US)**

(72) Inventeurs:
• **ARLIAUD, Jérôme**
**83910 Pourrieres (FR)**
• **CRUCIFIX, Adrien**
**13001 Marseille (FR)**
• **BLANC, Philippe**
**06904 Sophia Antipolis Cedex (FR)**

(74) Mandataire: **v. Bezold & Partner Patentanwälte - PartG mbB**
**Ridlerstraße 57**
**80339 München (DE)**

(56) Documents cités:
WO-A1-93/13396   DE-U1-202011 104 051
US-A1- 2007 084 502   US-A1- 2011 083 718
US-A1- 2013 256 506

## Description

La présente invention se rapporte à un procédé de pilotage de l'orientation d'un suiveur solaire mono-axe, ainsi qu'à un suiveur solaire mono-axe conçu pour la mise en œuvre d'un tel procédé.

L'invention concerne le domaine des suiveurs solaires, autrement appelés systèmes de support suiveur ou « solar tracker », prévus pour supporter des capteurs solaires, généralement du type panneau photovoltaïque.

Elle concerne plus particulièrement les suiveurs solaires du type mono-axe c'est-à-dire orientable selon un unique axe principal de rotation, pour une rotation permettant de suivre le soleil lors de son élévation et de sa descente d'est en ouest. Pour précision, un tel axe principal de rotation s'étend généralement horizontalement et sensiblement parallèlement au sol sur lequel le suiveur solaire est ancré.

US 2007/084502 A1 divulgue un procédé de pilotage de l'orientation d'un suiveur solaire, orientable autour d'un axe de rotation, ledit procédé accomplissant de manière répétitive des phases de pilotage successives, où chaque phase de pilotage met en oeuvre les étapes successives suivantes: observer la couverture nuageuse au-dessus du suiveur solaire, comparer la couverture nuageuse observée avec des modèles de couverture nuageuse, chaque modèle de couverture nuageuse étant associé à une consigne d'orientation du suiveur solaire, rapprochement de la couverture nuageuse observée avec un modèle de couverture nuageuse et asservir l'orientation du suiveur solaire en appliquant la consigne d'orientation associée audit modèle de couverture nuageuse retenu lors de l'étape.

DE 20 2011 104051 U1 divulgue capteurs et électronique pour la commande de la poursuite en espace ouvert avec des modules photovoltaïques. US 2013/256506 A1 divulgue un dispositif de poursuite solaire automatique à réglage latéral.

Dans ce domaine, il est classique d'asservir l'orientation du suiveur solaire en se basant sur un calcul astronomique de la position du soleil, pour un positionnement en temps réel en face du soleil.

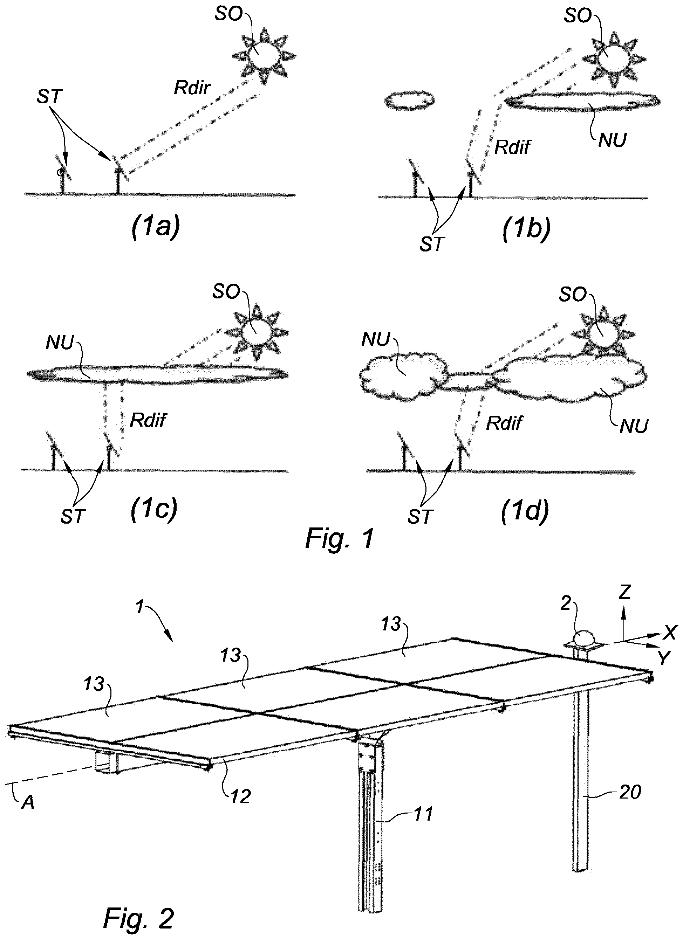

Ce type d'asservissement présente cependant un inconvénient majeur en offrant un déficit de rendement dans certaines conditions météorologiques, et nous nous référerons utilement à la figure 1 pour explication ; cette figure 1 comportant quatre schémas (1 a), (1 b), (1 c) et (1 d) illustrant chacun deux suiveurs solaires ST dans différentes conditions météorologiques, avec le soleil SO toujours à la même position et avec les suiveurs solaires ST toujours orientés face au soleil.

Le schéma (1 a) illustre des conditions météorologiques idéales, en l'absence de nuages, et les suiveurs solaires ST sont orientés en face du soleil SO afin de bénéficier d'un rayonnement solaire direct Rdir maximal. Dans ces conditions optimales avec une couverture nuageuse nulle, l'asservissement sur la position du soleil SO procure un fonctionnement maximal ; un tel asservissement correspondant à un asservissement de l'orientation du suiveur solaire sur un angle d'inclinaison dit direct défini par la direction du rayonnement solaire direct Rdir au niveau du suiveur solaire.

Les schémas (1 b), (1 c) et (1d) illustrent des conditions météorologiques dégradées, avec différentes couvertures nuageuses dépendant notamment de la surface nuageuse ou surface couverte, des types de nuages NU présents, du nombre et de la position des nuages NU vis-à-vis du soleil SO.

Dans de telles conditions nuageuses, l'asservissement sur la position du soleil SO peut ne pas procurer le meilleur rendement, en ne prenant pas en considération le rayonnement solaire diffus Rdif. Le rayonnement solaire diffus Rdif se manifeste lorsque le rayonnement solaire direct Rdir se disperse dans les nuages NU et les particules atmosphériques. Le rayonnement solaire diffus Rdif résulte de la diffraction de la lumière par les nuages NU et les molécules diverses en suspension dans l'atmosphère. Le rayonnement solaire diffus Rdif ne suit donc pas nécessairement la direction définie par le soleil SO en direction du point d'observation à la surface de la Terre.

Par conséquent, dans des conditions nuageuses, il peut être préférable, pour obtenir un rendement maximal au regard de ces conditions, d'orienter les suiveurs solaires ST sur une orientation dite indirecte ou diffuse selon une direction du rayonnement solaire diffus Rdif qui ne correspond pas nécessairement à la direction du rayonnement solaire direct Rdir ; un tel asservissement correspondant à un asservissement de l'orientation du suiveur solaire sur un angle d'inclinaison dit diffus défini par la direction du rayonnement solaire diffus Rdif au niveau du suiveur solaire.

Sur les schémas (1b), (1c) et (1d), les suiveurs solaires ST sont tous orientés selon l'angle d'inclinaison direct (face au soleil) alors que des orientations selon des angles d'inclinaison diffus offriraient des rendements meilleurs.

Ainsi, l'homme du métier serait tenté d'asservir, en temps réel, l'orientation du suiveur solaire sur un angle d'inclinaison optimal correspondant à un rayonnement solaire maximal. En l'absence de nuage, l'angle d'inclinaison optimal correspondrait à l'angle d'inclinaison direct et, en présence d'une couverture nuageuse voire d'un unique nuage devant le soleil, l'angle d'inclinaison optimal correspondrait à un angle d'inclinaison diffus. Pour ce faire, il suffirait de mesurer l'amplitude du rayonnement dans différentes directions (ou différentes inclinaisons), et d'établir la direction correspondant à une amplitude maximale pour en déduire l'angle d'inclinaison optimal.

Cependant, procéder ainsi présenterait de nombreux inconvénients, reposant tous sur la variation du rayonnement solaire diffus au cours du temps. En effet, suivant l'évolution temporelle de la couche nuageuse (du fait du déplacement des nuages sous l'effet des vents) et suivant la composition de cette couche nuageuse (nombre, dimensions, localisation et types de nuages), le rayonnement solaire diffus peut varier plus ou moins rapidement et donc l'angle d'inclinaison optimal peut varier plus ou moins vite au cours du temps.

Ainsi, en asservissant l'orientation du suiveur solaire sur cet angle d'inclinaison optimal, le suiveur solaire peut être amené à changer d'orientation plus ou moins souvent et plus ou moins vite. Or chaque changement d'orientation sollicite au moins un actionneur (généralement un moteur électrique), engendrant une consommation électrique et une usure des organes mécaniques sollicités par le changement d'orientation (organes du moteur, paliers, éléments de guidage en rotation, ...). Ces consommations électriques et ces usures ne seront pas nécessairement compensées par les gains de productivité obtenus en se calant en temps réel sur l'angle d'inclinaison optimal.

A titre d'exemple, en partant d'une situation de départ où l'angle d'inclinaison optimal correspond à l'angle d'inclinaison direct (du fait de l'absence de nuage entre le soleil et le suiveur solaire), si un nuage unique passe devant le soleil durant quelques minutes, l'angle d'inclinaison optimal va être modifié durant ces quelques minutes pour ensuite recouvrer l'angle d'inclinaison direct. Asservir en temps réel l'orientation du suiveur solaire sur l'angle d'inclinaison optimal conduirait, dans ce cas, à déplacer le suiveur solaire durant ces quelques minutes, pour un bénéfice certainement très faible au regard de la consommation électrique du ou des actionneurs et de l'usure.

La présente invention a pour but de résoudre ces inconvénients en proposant un procédé de pilotage de l'orientation d'un suiveur solaire mono-axe, mettant en œuvre une étape de rapprochement d'observations réelles de la couverture nuageuse avec des modèles de couverture nuageuse archivés dans une base de données, afin de ne pas asservir systématiquement l'orientation du suiveur solaire sur l'angle d'inclinaison optimal, mais d'appliquer un compromis avantageux entre les gains de productivité en énergie solaire et les pertes en consommation électrique du ou des actionneurs, et éventuellement en tenant compte de l'usure engendrée par les changements d'orientation.

A cet effet, elle propose un procédé de pilotage de l'orientation d'un suiveur solaire mono-axe orientable autour d'un axe de rotation, ledit procédé accomplissant de manière répétitive des phases de pilotage successives, où chaque phase de pilotage met en œuvre les étapes successives suivantes :

a) observer la couverture nuageuse au-dessus du suiveur solaire ;
b) comparer la couverture nuageuse observée avec des modèles de couverture nuageuse archivés dans une base de données, chaque modèle de couverture nuageuse étant associé à une consigne d'orientation du suiveur solaire ;

c) rapprochement de la couverture nuageuse observée avec un modèle de couverture nuageuse ;
d) asservir l'orientation du suiveur solaire en appliquant la consigne d'orientation associée audit modèle de couverture nuageuse retenu lors de l'étape c).

Ainsi, le procédé met en œuvre une comparaison entre les observations de la couche nuageuse et des modèles théoriques prédéfinis et auxquels sont associés des consignes d'orientation établies pour éviter de solliciter trop souvent le suiveur solaire dans des changements d'orientation qui ne procureraient que peu de gain énergétique, voire procureraient des pertes énergétiques, comme cela serait par exemple le cas si un unique nuage passe devant le soleil pour un temps réduit. Il est bien entendu que le pilotage et l'asservissement de l'orientation du suiveur solaire porte sur le pilotage et l'asservissement de son inclinaison autour de son axe de rotation, et en particulier de son angle d'inclinaison autour de cet axe.

Selon une caractéristique, chaque modèle de couverture nuageuse associe une consigne d'orientation qui est fonction d'une composition de la couche nuageuse dudit modèle, ladite composition dépendant de l'un au moins des paramètres suivants : nombre de nuages, surface couvrante du ou des nuages, épaisseur du ou des nuages, localisation du ou des nuages ; type du ou des nuages.

Ainsi, chaque modèle de couverture nuageuse est construit pour correspondre à un maximum de situations réelles.

Selon une autre caractéristique, pour chaque modèle de couverture nuageuse, la consigne d'orientation correspondante est prédéfinie en fonction de l'un au moins des paramètres suivants : un taux d'usure d'organes mécaniques du suiveur solaire sollicités lors d'un changement d'orientation du suiveur solaire, une consommation d'énergie nécessaire pour modifier l'orientation du suiveur solaire et une vitesse de déplacement du suiveur solaire lors d'un changement d'orientation.

Ainsi, la consigne d'orientation assignée à chaque modèle de couverture nuageuse dépend d'un ou plusieurs paramètres associés au suiveur solaire, et notamment à ses caractéristiques mécaniques, dans un souci d'optimiser les changements d'orientation du suiveur solaire.

Selon une autre caractéristique, les modèles de couverture nuageuse comprennent :

- au moins un modèle dit de couverture nuageuse nulle auquel est associée une consigne d'orientation sur un angle d'inclinaison dit direct établi par un calcul astronomique de la position du soleil ;
- au moins un modèle dit de grande couverture nuageuse auquel est associée une consigne d'orientation sur un angle d'inclinaison dit optimisé qui ne coïncide pas avec l'angle d'inclinaison direct.

Ainsi, dans le modèle de couverture nuageuse nulle, il est prévu un asservissement sur l'angle d'inclinaison direct (face au soleil), tandis que dans le modèle de grande couverture nuageuse, il est prévu un asservissement sur un autre angle d'inclinaison dit optimisé pour prendre en compte le rayonnement diffus.

Dans une réalisation particulière, l'angle d'inclinaison optimisé correspond à un angle associé à une mise à l'horizontal du suiveur solaire.

Ainsi, en cas de grande couverture nuageuse, il est prévu une mise à plat ou un positionnement à l'horizontal du suiveur solaire, afin que le ou les capteurs solaires soient à l'horizontal.

Avantageusement, les modèles de couverture nuageuse comprennent au moins un modèle dit de fine couverture nuageuse auquel est associée une consigne d'orientation sur un angle intermédiaire prédéfini entre l'angle d'inclinaison direct et un angle correspondant à une mise à l'horizontal du suiveur solaire.

Ainsi, en cas de fine (peu épaisse) couverture nuageuse, il est prévu un asservissement intermédiaire entre l'angle nul (positionnement à l'horizontal du suiveur) et l'angle direct (positionnement en face du soleil du suiveur) pour faire un compromis intéressant.

Avantageusement, les modèles de couverture nuageuse comprennent au moins un modèle dit de couverture nuageuse irrégulière auquel est associée une consigne d'orientation sur l'angle d'inclinaison direct.

Ainsi, en cas de présence éparse de nuages, il est prévu un asservissement sur l'angle d'inclinaison direct (face au soleil), afin de ne pas modifier l'orientation du suiveur à chaque fois qu'un nuage passe devant le soleil.

Selon une possibilité de l'invention, lors de l'étape a), l'observation de la couverture nuageuse est traduite en une cartographie de la luminance solaire en fonction de différents angles d'élévation et, lors de l'étape b), les modèles de couverture nuageuse sont constitués de modèles cartographiques et la comparaison est basée sur une comparaison entre la répartition de la luminance solaire sur la cartographie avec la répartition de la luminance solaire dans les différents modèles cartographiques.

Autrement dit, lors de l'étape b), est comparée la répartition dans l'espace d'observation des valeurs de la luminance solaire de la cartographie avec celle des différents modèles théoriques ; cet espace d'observation étant soit bidimensionnel si la cartographie est établie selon deux axes, de préférence l'axe nord-sud et l'axe est-ouest, soit monodimensionnel si la cartographie est établie selon un axe, en l'occurrence l'axe est-ouest.

Ainsi, le rapprochement réalisé lors de l'étape c) est de même basé sur un rapprochement de la répartition de la luminance solaire sur la cartographie avec un modèle cartographique présentant une répartition proche ou similaire avec une tolérance d'écart prédéfinie.

L'angle d'élévation du soleil correspond à l'angle autour de l'axe de rotation du suiveur solaire, entre le plan horizontal et le plan passant par l'axe de rotation du suiveur solaire et parallèle aux rayons du soleil.

Selon une possibilité de l'invention, en considérant une valeur maximale de luminance solaire correspondant à la valeur maximale de la luminance solaire accessible lors d'une observation en rayonnement direct :

- le modèle de couverture nuageuse nulle correspond à un modèle cartographique où la luminance solaire est au moins égale à 80 % de la valeur maximale sur un secteur angulaire inférieur à 30 degrés autour de l'angle d'inclinaison direct ; et
- le modèle de grande couverture nuageuse correspond à un modèle cartographique où la luminance solaire présente, sur un secteur angulaire supérieur à 150 degrés, une valeur basse et une valeur haute, avec un écart entre la valeur basse et la valeur haute qui est inférieur à 50 % de la valeur haute, avec la valeur haute qui est inférieure à 50 % de la valeur maximale et avec la valeur haute qui est associé à un angle d'élévation éloigné d'au moins 20 degrés de l'angle d'inclinaison direct.

Selon une possibilité de l'invention, le modèle de fine couverture nuageuse correspond à un modèle cartographique où la luminance solaire présente, sur un secteur angulaire supérieur à 150 degrés, une valeur basse et une valeur haute, avec un écart entre la valeur basse et la valeur haute qui est inférieur à 50 % de la valeur haute et avec la valeur haute qui est associé à un angle d'élévation situé à moins de 20 degrés de l'angle d'inclinaison direct.

Selon une possibilité de l'invention, le modèle de couverture nuageuse irrégulière correspond à un modèle cartographique où la luminance solaire est au moins égale à 50 % de la valeur maximale sur un secteur angulaire inférieur à 30 degrés autour de l'angle d'inclinaison direct, et est au moins égale à 20 % de la valeur maximale sur un secteur angulaire inférieur à 30 degrés autour d'un autre angle d'inclinaison.

En outre, l'observation de la couverture nuageuse peut être réalisée selon l'une des méthodes suivantes :

- prise d'images du ciel à partir du sol au moyen d'un appareil de prise de vue, tel qu'une caméra ;
- mesure de la luminance solaire à partir du sol au moyen d'un ensemble de plusieurs cellules photosensibles ;
- récupération d'images satellites du ciel au-dessus du suiveur solaire.

Avec une prise d'image, l'observation correspond à une image. Avec une mesure de la luminance solaire par des cellules photosensibles l'observation correspond à une matrice des mesures faites individuellement par chaque cellule photosensible, ces cellules photosensibles étant positionnées à différents angles d'élévation. Avec une récupération d'images satellites, l'observation correspond à une image satellite de la zone concernée.

Selon une caractéristique avantageuse, lors de l'étape a), est mise en œuvre une étape de pondération fréquentielle appliquée sur l'observation qui est fonction à la fois d'une réponse en fréquence de l'observation et d'une bande fréquentielle utile au capteur solaire.

Ainsi, la pondération fréquentielle va consister à appliquer un filtre fréquentielle qui tiendra compte de la réponse spectrale du capteur solaire.

Dans une réalisation particulière, en considérant que le procédé met en œuvre un asservissement sur une première consigne d'orientation associée à un premier modèle de couverture nuageuse sur une première série de plusieurs phases de pilotage successives, et en considérant que, à la suite de cette première série, la phase de pilotage suivante retient lors de son étape c) un second modèle de couverture nuageuse associé à une seconde consigne d'orientation, alors le procédé bascule dans un asservissement sur ladite seconde consigne d'orientation uniquement si la première série est suivie d'une seconde série comprenant un nombre prédéfini de phases de pilotage successives retenant toutes le second modèle de couverture nuageuse lors de leurs étapes c) respectives.

Ainsi, afin de limiter l'usure mécanique du suiveur solaire, la seconde consigne d'orientation sera prise en compte uniquement si l'observation est rapprochée du second modèle de couverture nuageuse pendant un minimum de temps.

Selon une possibilité de l'invention, si la première série n'est pas suivie d'une seconde série comprenant le nombre prédéfini de phases de pilotage successives retenant toutes le second modèle de couverture nuageuse, alors le procédé maintient l'asservissement sur ladite première consigne d'orientation ou bascule dans un asservissement sur un angle d'inclinaison direct.

Ainsi, si l'observation n'est pas rapprochée du second modèle de couverture nuageuse pendant un minimum de temps, alors l'asservissement reste inchangé ou bien bascule en suivie direct du soleil.

Selon une autre possibilité de l'invention, le nombre prédéfini de phases de pilotage successives de la seconde série est fonction de l'un au moins des paramètres suivants : l'horaire, l'écart angulaire entre la première consigne d'orientation et la seconde consigne d'orientation, un taux d'usure d'organes mécaniques du suiveur solaire sollicités lors d'un changement d'orientation du suiveur solaire, et une consommation d'énergie nécessaire pour modifier l'orientation du suiveur solaire.

Conformément à une autre caractéristique de l'invention, si lors d'une série comprenant un nombre prédéfini de phases de pilotage successives où, lors de chaque phase de pilotage, aucun modèle de couverture nuageuse de la base de données n'est rapproché de la couverture nuageuse observée, alors le procédé bascule dans un asservissement sur un angle d'inclinaison direct.

L'invention se rapporte également à un suiveur solaire mono-axe orientable autour d'un axe de rotation, du type comprenant une structure fixe d'ancrage au sol et une plateforme propre à supporter au moins un capteur solaire, ladite plateforme étant actionnable en rotation sur la structure fixe selon ledit axe de rotation au moyen d'un système d'actionnement, ledit suiveur solaire étant remarquable en ce qu'il comprend en outre un système d'observation de l'évolution dans le temps de la couverture nuageuse au-dessus du suiveur solaire et une unité de contrôle en liaison, d'une part, avec le système d'observation pour recevoir ses données d'observations et, d'autre part, avec le système d'actionnement pour piloter la rotation de la plateforme, où ladite unité de contrôle est conformé pour mettre en œuvre les étapes b) à e) du procédé de pilotage comme décrit ci avant.

D'autres caractéristiques et avantages de la présente invention apparaîtront à la lecture de la description détaillée ci-après, d'exemples de mise en œuvre non limitatifs, faite en référence aux figures annexées dans lesquelles :

- la figure 1, déjà commentée, comprend quatre schémas (1a), (1b), (1c) et (1d) illustrant chacun deux suiveurs solaires dans différentes conditions météorologiques ;
- la figure 2 est une vue schématique d'un suiveur solaire mono-axe conforme à l'invention, où sont illustrés l'ensemble structure fixe et plateforme mobile et un système d'observation de la couverture nuageuse ;
- la figure 3 est une vue schématique d'un premier système d'observation conformé pour réaliser une cartographie monodimensionnelle de la luminance solaire, établie uniquement en élévation selon une direction est-ouest ;
- la figure 4 est une représentation schématique à plat d'un premier système d'observation équivalent à celui de la figure 3 (à gauche), et d'une cartographie monodimensionnelle de la luminance solaire (à droite) issue d'un tel système d'observation ;
- la figure 5 est une vue schématique d'un deuxième système d'observation conformé pour réaliser une cartographie bidimensionnelle de la luminance solaire, établie à la fois en élévation selon une direction est-ouest et en azimut selon une direction nord-sud ;
- la figure 6 est une représentation schématique à plat d'un deuxième système d'observation équivalent à celui de la figure 5 (à gauche), et d'une cartographie bidimensionnelle de la luminance solaire (à droite) issue d'un tel système d'observation ;
- la figure 7a est une vue schématique de côté de quatre colonnes d'une cartographie bidimensionnelle de la luminance solaire, avec les angles d'azimut associés aux différentes colonnes ;
- la figure 7b est une vue schématique de côté de quatre bandes d'une cartographie monodimensionnelle ou bidimensionnelle de la luminance solaire, avec les angles d'élévation ou d'inclinaison associés aux différentes bandes ;

- la figure 8 est une vue schématique d'un troisième de système d'observation du type caméra ;

- la figure 9 est une représentation schématique d'une observation (l'image en haut à gauche) faite par un troisième système d'observation équivalent à celui de la figure 8, et d'une cartographie bidimensionnelle de la luminance solaire (en bas à gauche) issue d'une telle l'observation, après plusieurs étapes de traitement d'image, et d'une cartographie monodimensionnelle de valeurs de luminance équivalente (en bas à droite) issue de cette cartographie bidimensionnelle ;

- la figure 10 est une vue schématique d'un autre premier système d'observation servant à la définition des modèles cartographiques de la figure 11 ;

- la figure 11 représente cinq modèles cartographiques (a) à (e) associés au premier système d'observation de la figure 10 ;

- la figure 12 représente cinq modèles cartographiques (a) à (e) associés au troisième système d'observation de la figure 8 ; et

- la figure 13 est une représentation sous forme d'un schéma fonctionnel des éléments fonctionnels employés pour la mise en œuvre d'un procédé de pilotage conforme à l'invention.

En référence à la figure 2, un suiveur solaire 1 mono-axe orientable autour d'un axe de rotation A, du type comprenant une structure fixe 11 d'ancrage au sol constituée d'un ou plusieurs pylônes ancrés au sol, par exemple par battage, vissage, boulonnage, lestage, ou autre moyen équivalent permettant de fixer et stabiliser au sol la structure fixe 11.

Le suiveur solaire 1 comprend en outre une plateforme 12 mobile montée à rotation sur la structure fixe 11 selon l'axe de rotation A, et plus spécifiquement montée à rotation sur les extrémités supérieures du ou des pylônes. Cette plateforme 12 est propre à supporter au moins un capteur solaire 13, et notamment un ou plusieurs panneaux photovoltaïques.

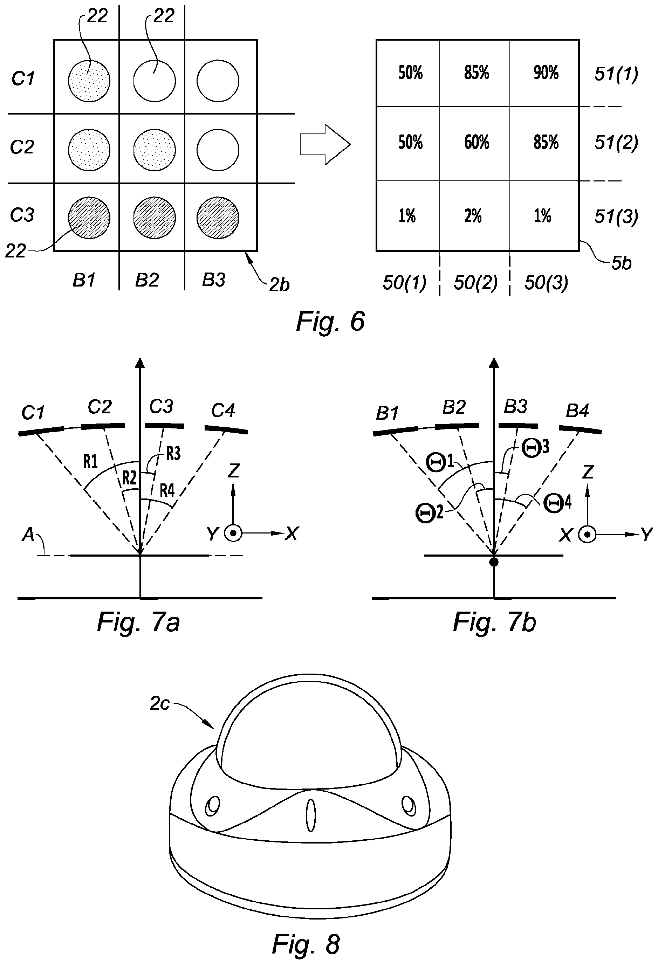

En référence à la figure 2 et aux figures 7a et 7b, l'axe de rotation A est substantiellement horizontal et dirigé selon un axe longitudinal X selon la direction nord-sud. Lorsque le suiveur solaire 1 est à l'horizontal ou à plat (comme visible sur la figure 2) avec sa plateforme 12 horizontale, la plateforme 12 s'étend selon un plan horizontal défini par l'axe longitudinal X et par un axe transversal Y selon la direction est-ouest, de manière orthogonale à un axe vertical Z.

Pour la suite de la description, l'angle d'inclinaison du suiveur solaire 1 (ou angle d'inclinaison de la plateforme 12 et du ou des capteurs solaires 13) correspond à l'angle de la normale à la plateforme 12 vis-à-vis de l'axe vertical Z pris dans le plan (Y, Z). Ainsi, lorsque le suiveur solaire 1 est à l'horizontal ou à plat (comme schématisé sur les figures 2, 7a et 7b), cet angle d'inclinaison est de 0 degré.

Le suiveur solaire 1 comprend également un système d'observation 2 de la couverture nuageuse au-dessus du suiveur solaire 1, autrement dit pour l'observation du ciel au-dessus du suiveur solaire 1. Ce système d'observation 2 peut être associé à un unique suiveur solaire 1 ou, de manière économique, être partagé avec plusieurs suiveurs solaires.

Le système d'observation 2 est fixe, et peut être surélevé par rapport au sol en étant par exemple monté sur un poteau 20.

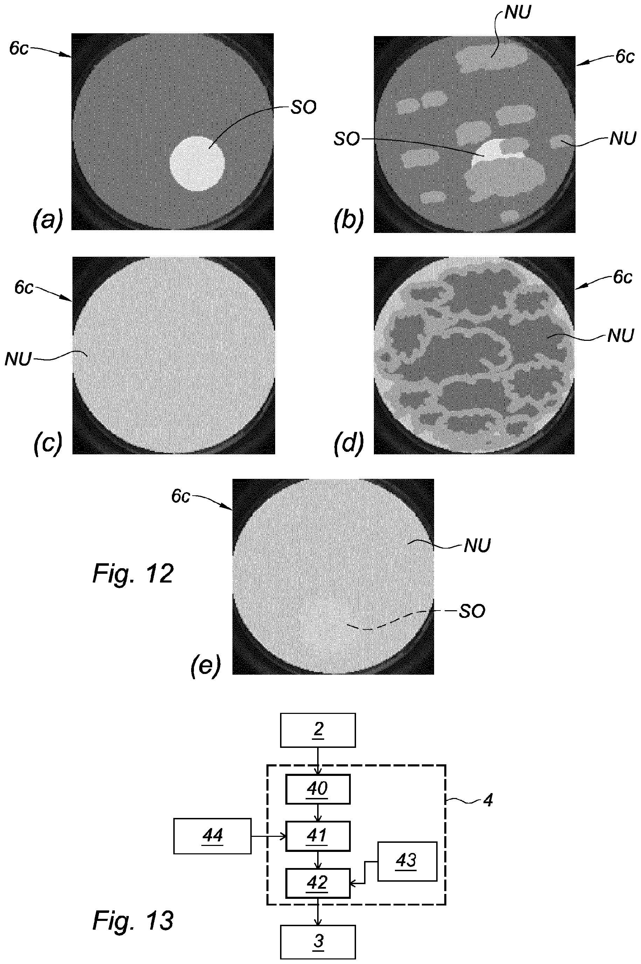

Le suiveur solaire 1 comprend en outre un système d'actionnement (non illustré sur la figure 2 et portant la référence numérique 3 sur la figure 13) qui assure la mise en rotation de la plateforme 12 selon l'axe de rotation A.

Ce système d'actionnement 3 comprend un actionneur, par exemple du type vérin (électrique, pneumatique ou hydraulique) ou moteur électrique (par exemple moteur rotatif). Ce système d'actionnement 3 comprend en outre un système mécanique de transmission du mouvement en sortie de l'actionneur (mouvement rotatif pour un moteur rotatif, ou mouvement linéaire pour un vérin) en un mouvement de rotation de la plateforme 12. Ce système mécanique de transmission peut être, à titre d'exemple non limitatif, un système à parallélogramme déformable, un système de renvoi par poulie, un système à pignon, un système à chaîne, un système à courroie, un système à crabot, un système avec arbre de transmission, un système à bielle, etc.

Il est envisageable que l'actionneur soit propre au suiveur solaire 1, ou bien soit partagé entre plusieurs suiveurs solaires. Dans le cas où l'actionneur est partagé, les plateformes 12 des différents suiveurs solaires sont avantageusement couplées en rotation, pour une rotation synchrone sous l'effet de l'actionneur commun.

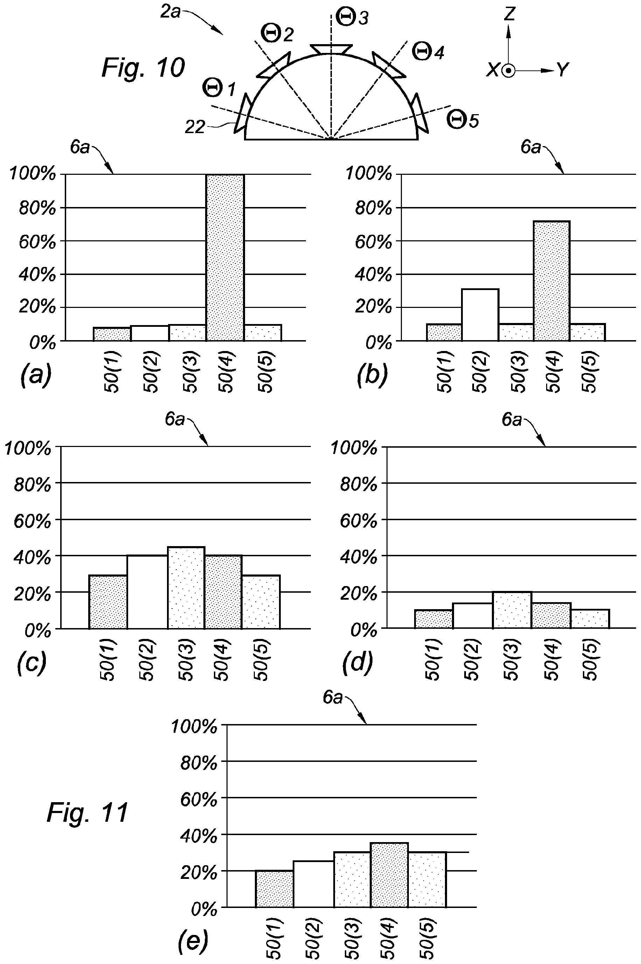

En référence à la figure 10, le suiveur solaire 1 comprend également une unité de contrôle 4 du type carte électronique, qui est en liaison avec le système d'observation 2 afin de recevoir ses observations (ou données d'observations) et qui est également en liaison avec le système d'actionnement 3 pour piloter son fonctionnement et ainsi piloter la rotation de la plateforme 12, autrement dit l'orientation du suiveur solaire 1.

Cette unité de contrôle 4 comprend plusieurs modules, à savoir :

- un module cartographique 40 prévu pour traduire ou convertir chaque observation faite par le système d'observation 2 en une cartographie 5 de la luminance solaire, cette cartographie de la luminance solaire traduisant la répartition de la luminance solaire au moins à différents angles d'élévation (l'angle d'élévation étant comparable à l'angle d'inclinaison en correspondant à l'angle autour de l'axe de rotation A du suiveur solaire 1, entre le plan horizontal (X, Y) et la droite allant du système d'observation 2 jusqu'au point observé dans le ciel) ;

- un module de comparaison 41 qui compare la cartographie en provenance du module cartographique 40 avec des modèles cartographiques 6 archivés dans une base de données 44, et qui rapproche ladite cartographie d'un modèle cartographique 6 établi comme étant le plus proche en matière de répartition de la luminance solaire, où chaque modèle cartographique 6 est associé à une consigne d'orientation du suiveur solaire 1 ;
- un module d'asservissement 42 qui récupère à la fois la consigne d'orientation provenant du module de comparaison 41 ainsi que l'angle d'inclinaison direct défini par la direction du rayonnement solaire direct au niveau du suiveur solaire 1, cet angle d'inclinaison direct étant issu d'un module de calcul astronomique 43 qui calcule en temps réel la position du soleil, où le module d'asservissement 42 sort une consigne angulaire à destination du système d'actionnement 3 afin de piloter des changements d'orientation de la plateforme 12 du suiveur solaire 1.

Il est à noter que cette unité de contrôle 4 peut être propre au suiveur solaire 1, ou bien être partagée entre plusieurs suiveurs solaires, et de préférence entre plusieurs suiveurs solaires réunis en ligne (s'étendant de nord en sud) au sein d'installations solaires linéaires.

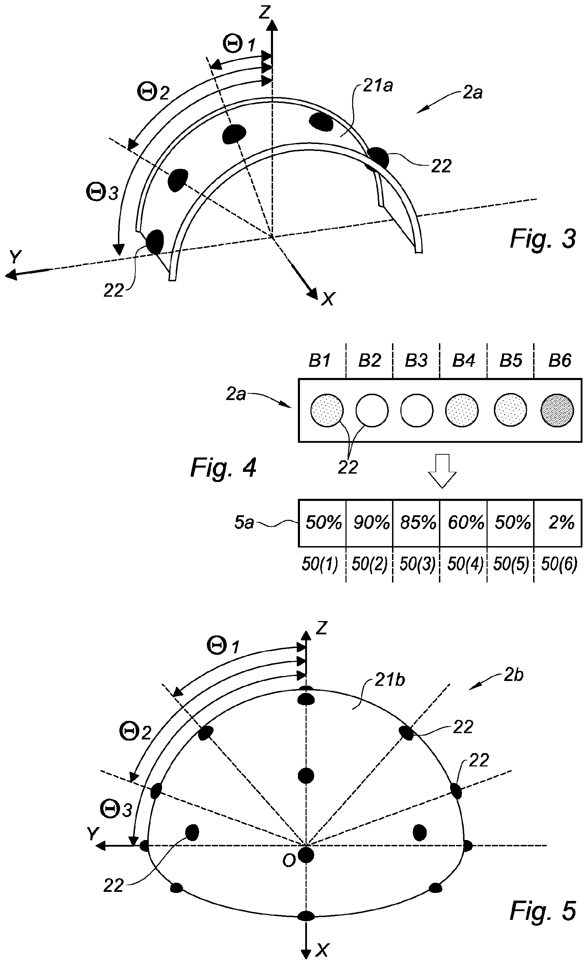

Dans un premier mode de réalisation illustré sur la figure 3, le système d'observation 2a comprend un support 21a en forme d'arche semi-circulaire centré autour d'un axe X parallèle à l'axe de rotation A du suiveur solaire, ce support 21a supportant des cellules photosensibles 22.

Ces cellules photosensibles 22 sont positionnées le long de plusieurs bandes (visibles sur les figures 4 et 7b) réparties selon plusieurs angles dits d'élévation Oi qui sont mesurés vis-à-vis de l'axe vertical Z dans le plan (Y, Z) autour de l'axe X, le repère (X, Y, Z) étant centré sur le centre O du support arqué 21a. L'angle d'élévation Θi est donc à rapprocher de l'angle d'inclinaison du suiveur solaire 1. Dans l'exemple de la figure 3, les cellules photosensibles 22 sont réparties selon six bandes à des angles d'élévation de + Θ1, + 02, + 03, - Θ1, - Θ2 et - Θ3 ; avec par exemple [Θ1]=30 degrés, [Θ2]=60 degrés et [Θ3]=90 degrés. Ces angles d'élévation Θi et ces bandes Bi sont également visibles sur la figure 7b.

Dans un deuxième mode de réalisation illustré sur la figure 5, le système d'observation 2b comprend un support 21b en forme de dôme hémisphérique supportant des cellules photosensibles 22.

Ces cellules photosensibles 22 sont positionnées le long de plusieurs bandes Bi (visibles sur les figure 6 et 7b) réparties selon plusieurs angles dits d'élévation Θì qui sont mesurés vis-à-vis de l'axe vertical Z dans le plan (Y, Z) autour de l'axe X, le repère (X, Y, Z) étant centré sur le centre O du dôme hémisphérique 21. L'angle d'élévation Θi est donc à rapprocher de l'angle d'inclinaison du suiveur solaire 1. Dans l'exemple de la figure 5, les cellules photosensibles 22 sont réparties selon sept bandes à des angles d'élévation de 0, + Θ1, + 02, + 03, - Θ1, - Θ2 et - Θ3 ; avec par exemple [Θ1]=30 degrés, [Θ2]=60 degrés et [Θ3]=90 degrés. Ces angles d'élévation Θi sont également visibles sur la figure 7b.

Dans ce deuxième mode de réalisation, sur chaque bande Bi sont présentes une voire plusieurs cellules photosensibles 22. Dans le cas d'une bande Bi de plusieurs cellules photosensibles 22, les cellules photosensibles 22 d'une même bande Bi sont réparties selon plusieurs angles dits d'azimut Rj qui sont mesurés vis-à-vis de l'axe vertical Z dans le plan (X, Z) autour de l'axe Y. Ainsi, en plus d'être réparties selon les bandes Bi à différents angles d'élévation Oi, les cellules photosensibles 22 sont également réparties selon des colonnes Cj (visibles sur les figures 6 et 7a) à différents angles d'azimut Rj ; ces angles d'azimut Rj sont visibles sur la figure 7a.

Dans ces deux modes de réalisation, plus le système d'observation 2a, 2b comprend de cellules photosensibles 22, et en particulier plus le système d'observation 2a, 2b comprend de bandes Bi de cellules photosensibles 22, et meilleure seront la résolution et la précision angulaire.

Ces cellules photosensibles 22 peuvent être de la même technologie que les panneaux photovoltaïques 13 afin de pouvoir appliquer une pondération dépendant de la gamme de longueur d'onde utile aux panneaux photovoltaïques 13. De préférence, ces cellules photosensibles 22 feront l'objet d'un étalonnement préalable pour obtenir une meilleure précision.

Ainsi, avec un tel premier ou deuxième système d'observation 2a, 2b, en récupérant les mesures de la luminosité de chaque cellule photosensible 22 et en connaissant les angles d'élévation Θi (ou angles d'inclinaison associées) des différentes bandes Bi, et le cas échéant les angles d'azimut Rj des différentes colonnes Cj, le module cartographique 40 convertit une observation faite par le premier ou deuxième système d'observation 2a, 2b en une cartographie 5a, 5b de la luminance solaire qui est monodimensionnelle pour le premier système d'observation 2a (voir la cartographie 5a visible sur la figure 4) ou bidimensionnelle pour le deuxième système d'observation 2b (voir la cartographie 5b visible sur la figure 6).

En référence à la figure 4, pour le premier système d'observation 2a, la cartographie 5a monodimensionnelle forme une carte de luminance solaire comprenant plusieurs bandes 50(i) (i entier) réparties ou établies selon une direction parallèle à l'axe transversal Y (autrement dit selon une direction est-ouest), et associées respectivement à différents angles d'élévation ou d'inclinaison Oi, de sorte que chaque bande 50(i) correspond à un angle d'inclinaison Θì du suiveur solaire 1 ; cet angle d'élévation Θì étant pour rappel mesuré autour de l'axe X nord-sud.

Ainsi, la cartographie 5a monodimensionnelle comprend NB bandes 50(i) (où NB correspond au nombre de cellules photosensibles 22) et à chaque bande 50(i) correspond une valeur (absolue ou relative) de luminance solaire Lum(i).

Sur la figure 4 en haut, un exemple de premier système d'observation 2a est illustré schématiquement à plat et comprend six cellules photosensibles 22 réparties selon six bandes B1 à B6 qui sont associées à six angles d'élévation (ou angles d'inclinaison). A ce premier système d'observation 2a correspond une cartographie 5a monodimensionnelle avec six bandes 50(1) à 50(6), et où les valeurs de luminance solaire sont exprimées de manière relative en pourcentage par rapport à une valeur maximale de luminance solaire correspondant à la valeur maximale de la luminance solaire accessible lors d'une observation en rayonnement direct. Ainsi, un pourcentage de 100 % correspond à cette valeur maximale de luminance solaire.

En référence à la figure 6, pour le deuxième système d'observation 2b, la cartographie 5b bidimensionnelle forme une carte (ou matrice) de luminance solaire comprenant :

- plusieurs bandes 50(i) (i entier) réparties selon une première direction parallèle à l'axe transversal Y (autrement dit selon une direction est-ouest), et associées respectivement à différents angles d'élévation ou d'inclinaison Oi, de sorte que chaque bande 50(i) correspond à un angle d'inclinaison $\Theta$i du suiveur solaire 1 (cet angle d'élévation Oi étant pour rappel mesuré autour de l'axe X nord-sud) ; et
- plusieurs colonnes 51(j) (j entier) réparties selon une seconde direction parallèle à l'axe X (autrement dit selon une direction nord-sud) et associées respectivement à différents angles d'azimut Rj (cet angle d'azimut Rj étant pour rappel mesuré autour de l'axe Y est-ouest).

Ainsi, la cartographie 5b bidimensionnelle comprend NT cases (où NT correspond au nombre de cellules photosensibles 22) et à chaque case correspond une valeur (absolue ou relative) de luminance solaire Lum(i, j).

Sur la figure 6 à gauche, un exemple de deuxième système d'observation 2b est illustré schématiquement à plat et comprend neuf cellules photosensibles 22 réparties selon trois bandes B1, B2, B3 qui sont associées à trois angles d'élévation (ou angles d'inclinaison), et selon trois colonnes C1, C2, C3 qui sont associées à trois angles d'azimut. A ce deuxième système d'observation 2b correspond une cartographie 5b bidimensionnelle avec trois bandes 50(1), 50(2), 50(3) et trois colonnes 51(1), 51(2), 51(3), et où les valeurs de luminance solaire sont exprimées de manière relative en pourcentage par rapport à une valeur maximale de luminance solaire.

Dans un troisième mode de réalisation illustré sur la figure 8, le système d'observation 2c comprend une caméra, notamment du type caméra hémisphérique, afin d'extraire des images du ciel.

De manière avantageuse, le troisième système d'observation 2c (appelé par la suite caméra) est conformé pour prendre des images dans une largeur spectrale suffisante pour la technologie des capteurs solaires 13, et notamment du ou des panneaux photovoltaïques.

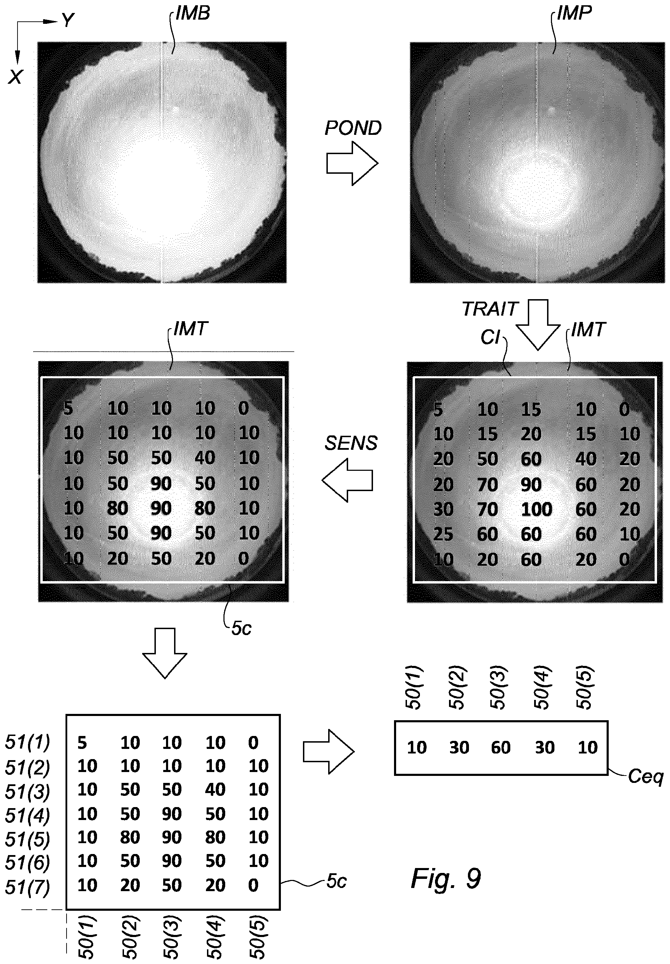

En se référant à la figure 9, la caméra 2c délivre une image brute IMB du ciel qui est ensuite délivré au module cartographique 40 pour convertir cette image brute IMB (ou observation) en une cartographie 5 bidimensionnelle de la luminance solaire. A cette image brute IMB bidimensionnelle est associé un repère (X, Y), ces axes X et Y ayant déjà été définis ci-avant.

Avec une telle caméra 2c, le module cartographique 40 met en œuvre une succession d'étapes de traitement d'image pour partir de l'image brute IMB jusqu'à la cartographie 5c.

Dans une première étape POND, le module cartographique 40 met en œuvre une pondération fréquentielle appliquée sur l'image brute IMB (ou signal vidéo) récupéré, pour obtenir une image dite pondérée IMP ; cette pondération fréquentielle consistant à appliquer un filtre fréquentiel sur l'observation (une telle pondération pouvant également être appliquée sur l'observation faite par les premier et deuxième systèmes d'observation 2a, 2b) qui est fonction à la fois de la réponse en fréquence du système d'observation 2 (que ce soit les cellules photosensibles 22 ou la caméra 2c) et de la bande fréquentielle utile (ou réponse spectrale) aux panneaux photovoltaïques 13.

Dans une seconde étape TRAIT, le module cartographique 40 met en œuvre un traitement de l'image pondérée IMP consistant à corriger l'image des défauts (traitement de suppression du bruit, traitement de l'éblouissement ou « blooming », traitement de la saturation, ...) pour obtenir une image dite traitée IMT. Puis, le module cartographique 40 met en œuvre un calcul (soit pixel par pixel, soit zone par zone où chaque zone comprend plusieurs pixels) de la répartition de la luminance solaire sur la l'image traitée IMT afin de générer une cartographie initiale CI bidimensionnelle formant une carte (ou matrice) de luminance solaire répartie selon plusieurs bandes associées respectivement à différents angles d'élévation ou d'inclinaison $\Theta$(i) et selon plusieurs colonnes associées respectivement à différents angles d'azimut ; sur la figure 9, les valeurs de luminance solaire de la cartographie initiale CI sont exprimées de manière relative en pourcentage par rapport à la valeur maximale de luminance solaire.

Dans une troisième étape SENS, le module cartographique 40 applique sur la cartographie initiale CI un coefficient dépendant de la variation de la sensibilité de la caméra 2, afin de générer une cartographie 5c bidimensionnelle du même type que la cartographie 5b bidimensionnelle décrite ci-dessus. En effet, l'amplitude (ou luminosité) des données délivrées par la caméra 2 est proportionnellement liée à la valeur du rayonnement solaire, de sorte que ce coefficient prend en compte cette proportionnalité dépendant de la variation de la sensibilité de la caméra 2.

Ainsi, le module cartographique 40 génère une cartographie 5c bidimensionnelle formant une carte (ou matrice) de luminance solaire répartie selon plusieurs bandes 50(i) associées respectivement à différents angles d'élévation ou d'inclinaison Θi et selon plusieurs colonnes 51(j) associées respectivement à différents angles d'azimut Rj. Dans l'exemple de la figure 9, la cartographie 5 comprend cinq bandes 50(1), ..., 50(5) et sept colonnes 51(1), ..., 51(7), et les valeurs de luminance solaire sont exprimées de manière relative en pourcentage par rapport à la valeur maximale de luminance solaire.

La résolution de la cartographie 5 (autrement dit le nombre de bandes et de colonnes) et donc la précision angulaire dépendent de la finesse du traitement d'image mis en œuvre par le module cartographique 40, et également de la sensibilité et de la résolution du système d'observation 2. Pour les premier et deuxième systèmes d'observation 2a, 2b avec des cellules photosensibles 22, cette sensibilité dépend de la sensibilité des cellules photosensibles 22, et cette résolution dépend du nombre et de la répartition des cellules photosensibles 22. Pour le troisième système d'observation 2c du type caméra, cette sensibilité et cette résolution dépendent de la qualité de la caméra.

A partir d'une telle cartographie 5a, 5b, 5c (qu'elle soit issue de l'un ou l'autre des systèmes d'observation 2a, 2b, 2c décrits ci-dessus), le module de comparaison 41 met en œuvre une comparaison de cette cartographie 5a, 5b, 5c avec les modèles cartographiques 6 pour extraire un modèle cartographique 6 approchant ou équivalent selon des critères de rapprochement prédéfinis.

Dans le cas du premier système d'observation 2a, les cartographies 5a étant monodimensionnelles, les modèles cartographiques 6a associés sont également monodimensionnels, et traduisent chacun un modèle théorique de couverture nuageuse traduit par une répartition de la luminance solaire selon plusieurs bandes associées respectivement à différents angles d'élévation ou d'inclinaison Oi.

En référence aux figures 10 et 11, avec un premier système d'observation 2a comprenant 5 cellules photosensibles 22 réparties à cinq angles d'élévation Θ1, 02, 03, Θ4 et Θ, plusieurs exemples associés de modèles cartographiques 6a monodimensionnels sont illustrés ; ces modèles cartographiques 6a étant schématisés sous forme d'histogrammes (équivalents à la cartographie 5a de la figure 4), avec en ordonnée la valeur de la luminance solaire exprimée de manière relative en pourcentage par rapport à la valeur maximale de luminance solaire, et avec en abscisse les bandes 50(i) (voire les angles d'élévation Θi).

Un premier modèle 6a schématisé par l'histogramme 11(a) correspond à un modèle de couverture nuageuse nulle, où la luminance solaire est au moins égale à 80 % de la valeur maximale sur un secteur angulaire inférieur à 30 degrés autour de l'angle d'inclinaison direct.

Dans cet histogramme 11(a), il est à noter que :

- à la bande 50(4) et donc à l'angle d'élévation Θ4 sont associés une luminance solaire relative de 100 %,
- pour les autres bandes 50(1), 50(2), 50(3), 50(5), la luminance solaire relative est inférieure à 10 %.

Ce modèle de couverture nuageuse nulle modélise un ciel avec quasiment aucun nuage, où le rayonnement direct est sensiblement situé à l'angle d'élévation Θ4.

Un deuxième modèle 6a schématisé par l'histogramme 11(b) correspond à un modèle de couverture nuageuse irrégulière, où la luminance solaire est au moins égale à 50 % de la valeur maximale sur un secteur angulaire inférieur à 30 degrés autour de l'angle d'inclinaison direct, et est au moins égale à 20 % de la valeur maximale sur un secteur angulaire inférieur à 30 degrés autour d'un autre angle d'inclinaison.

Dans cet histogramme 11(b), il est à noter que :

- à la bande 50(4) et donc à l'angle d'élévation Θ4 sont associés une luminance solaire relative de 70 %,
- à la bande 50(2) et donc à l'angle d'élévation Θ2 sont associés une luminance solaire relative de 30 %,
- pour les autres bandes 50(1),k 50(3) et 50(5), la luminance solaire relative est inférieure à 10 %.

Ce modèle de couverture nuageuse irrégulière modélise un ciel avec un seul nuage ou peu de nuages répartis de manière irrégulière, où le rayonnement direct est sensiblement situé à l'angle d'élévation Θ4 et où le rayonnement diffus du au(x) nuage(s) est sensiblement situé à l'angle d'élévation Θ2.

Un troisième et un quatrième modèle 6a schématisé par les histogrammes 11(c) et 11(d) correspondent chacun à un modèle de grande couverture nuageuse, où la luminance solaire présente, sur un secteur angulaire supérieur à 150 degrés, une valeur basse et une valeur haute, avec un écart entre la valeur basse et la valeur haute qui est inférieur à 50 % de la valeur haute, avec la valeur haute qui est inférieur à 50 % de la valeur maximale et avec la valeur haute qui est associé à un angle d'élévation éloigné d'au moins 20 degrés de l'angle d'inclinaison direct.

Dans l'histogramme 11(c), il est à noter que la valeur haute est de 45 % à l'angle d'élévation Θ3 et la valeur basse est de 30 % aux angles d'élévation Θ1 et Θ5, alors que l'angle d'inclinaison direct correspond sensiblement à l'angle d'élévation Θ4. Dans l'histogramme 11(d), il est à noter que la valeur haute est de 20 % à l'angle d'élévation Θ3 et la valeur basse est de 10 % aux angles d'élévation Θ1 et 05, alors que l'angle d'inclinaison direct correspond sensiblement à à l'angle d'élévation Θ4.

Ce modèle de grande couverture nuageuse modélise un ciel couvert, avec une surface nuageuse quasiment uniforme sur toute la partie de ciel observé. Le modèle de l'histogramme 11(d) modélise une couverture nuageuse plus épaisse que dans le modèle de l'histogramme 11(c).

Un cinquième modèle 6a schématisé par l'histogramme 11(e) correspond à un modèle de fine couverture nuageuse où la luminance solaire présente, sur un secteur angulaire supérieur à 150 degrés, une valeur basse et une valeur haute, avec un écart entre la valeur basse et la valeur haute qui est inférieur à 50 % de la valeur haute et avec la valeur haute qui est associé à un angle d'élévation situé à moins de 20 degrés de l'angle d'inclinaison direct.

Dans l'histogramme 11(e), il est à noter que la valeur haute est de 37 % à l'angle d'élévation Θ4 qui correspond sensiblement à l'angle d'inclinaison direct, et la valeur basse est de 20 % à l'angle d'élévation Θ1 le plus éloigné de l'angle d'élévation Θ4.

Dans le cas du deuxième et du troisième système d'observation 2b, 2c, les cartographies 5b, 5c étant bidimensionnelles, les modèles cartographiques 6 associés sont également bidimensionnels, et traduisent chacun un modèle théorique de couverture nuageuse traduit par une répartition de la luminance solaire selon plusieurs bandes associées respectivement à différents angles d'élévation ou d'inclinaison Θi et selon plusieurs colonnes associées respectivement à différents angles d'azimut Rj.

Il serait cependant envisageable d'employer des modèles cartographiques 6a monodimensionnels pour les cartographies 5b, 5c des deuxième et du troisième système d'observation 2b, 2c. Pour ce faire, le module cartographique 40 devra convertir les cartographies 5b, 5c bidimensionnelles en une cartographie équivalente monodimensionnelle.

A titre d'exemple, et en référence à la figure 9, cette conversion consiste à calculer, pour chaque bande 50(i) de la cartographie 5c bidimensionnelle, une valeur de luminance équivalente Leq(i) à partir de l'ensemble des valeurs de luminance L(i, j) prises dans la bande 50(i). Pour chaque bande 50(i), la valeur de luminance équivalente Leq(i) de la bande 50(i) est fonction des valeurs de luminance L(i, j) prises dans la bande 50(i) et des angles d'azimut Rj des différentes colonnes 51(j) selon la formule suivante (en se référant à la figure 7a) :

$$Leq(i) = \sum_{j} Lum(i,j) \times \cos Rj$$

On obtient ainsi une cartographie équivalente Ceq monodimensionnelle traduisant la répartition des valeur de luminance équivalente Leq(i) associées aux différentes bandes 50(i). Ensuite, c'est cette cartographie équivalente Ceq monodimensionnelle qui sera comparée aux modèles cartographiques 6a monodimensionnels.

En référence à la figure 12, avec un troisième système d'observation 2c, plusieurs exemples associés de modèles cartographiques 6c bidimensionnels sont illustrés ; ces modèles cartographiques 6c étant schématisés sous forme d'images en deux dimensions.

Un premier modèle 6c schématisé par l'image 12(a) correspond à un modèle de couverture nuageuse nulle, tout comme le modèle 6a de l'histogramme 11(a), où le soleil SO est pleinement visible sans présence de nuage. Un deuxième modèle 6c schématisé par l'image 12(a) correspond à un modèle de couverture nuageuse irrégulière, tout comme le modèle 6a de l'histogramme 11(b), où quelques nuages NU épars ne dissimulent pas complètement le soleil SO. Un troisième modèle 6c schématisé par l'image 12(c) correspond à un modèle de grande couverture nuageuse, tout comme le modèle 6a de l'histogramme 11(c), où le ciel est complètement nuageux avec des nuages NU répartis de manière uniforme et dissimulant le soleil. Un quatrième modèle 6c schématisé par l'image 12(d) correspond à un modèle de grande couverture nuageuse, tout comme le modèle 6a de l'histogramme 11(d), où le ciel est complètement nuageux avec des nuages NU répartis de manière uniforme et dissimulant le soleil, ces nuages étant plus épais que ceux de l'image 12(c). Un cinquième modèle 6c schématisé par l'image 12(e) correspond à un modèle de fine couverture nuageuse, tout comme le modèle 6a de l'histogramme 11(e), où le ciel est complètement nuageux avec des nuages NU répartis de manière uniforme, mais où le soleil SO reste visible à travers la fine épaisseur des nuages NU.

Concernant les modèles de couverture nuageuse nulle et de couverture nuageuse irrégulière (illustrés sur les histogrammes 11(a), 11(b), et sur les images 12(a) et 12(b)), la consigne d'orientation associée est une consigne d'orientation sur l'angle d'inclinaison direct.

Concernant les modèles de grande couverture nuageuse (illustrés sur les histogrammes 11(c), 11(d), et sur les images 12(c) et 12(d)), la consigne d'orientation associée est une consigne d'orientation sur un angle d'inclinaison dit optimisé qui correspond à un angle d'inclinaison nul pour une mise à l'horizontal du suiveur solaire 1.

Concernant le modèle de fine couverture nuageuse (illustrés sur l'histogramme 11(e) et sur l'image 12(e)), la consigne d'orientation associée est une consigne d'orientation sur un angle d'inclinaison intermédiaire prédéfini pris entre l'angle d'inclinaison direct et l'angle nul (correspondant pour à une mise à l'horizontal du suiveur solaire 1).

Le module de comparaison 41 compare pour rappel la cartographie en provenance du module cartographique 40 avec les modèles cartographiques 6 archivés dans une base de données 44, et rapproche ladite cartographie d'un modèle cartographique 6 établi comme étant le plus proche en matière de répartition de la luminance solaire.

Pour réaliser cette comparaison et ce rapprochement, le module de comparaison 41 compare les luminances solaires bande par bande (et éventuellement colonne par colonne), et retient le modèle cartographique 6 présentant, pour chaque bande, la plus grande proximité dans la valeur de la luminance solaire au regard d'une tolérance donnée.

Ensuite, une fois qu'un modèle cartographique 6 est retenu, la consigne d'orientation associée au modèle cartographique 6 retenu est adressé au module d'asservissement 42, ce module d'asservissement 42 récupérant également l'angle d'inclinaison direct en provenance du module de calcul astronomique 43.

Puis, le module d'asservissement 42 adresse au système d'actionnement 3 une consigne angulaire établi sur la base de la consigne d'orientation associée au modèle cartographique 6 retenu, et qui peut prendre la valeur de l'angle d'inclinaison direct (dans le cas des modèles de couverture nuageuse nulle et de couverture nuageuse irrégulière), la valeur nulle (dans le cas des modèles de grande couverture nuageuse) ou une valeur intermédiaire entre la valeur nulle et la valeur de l'angle d'inclinaison direct (dans le cas des modèles de fine couverture nuageuse).

Il est à noter que si, durant un certain temps, aucun modèle cartographique 6 de la base de données n'est rapproché des cartographies 5 successives issues de l'observation (car les écarts de luminance solaire entre les cartographies 5 et les modèles cartographiques 6 dépassent les tolérances), alors le module d'asservissement 42 bascule automatiquement dans un asservissement sur l'angle d'inclinaison direct.

Il est à noter que, en partant d'une situation d'asservissement sur une première consigne d'orientation associée à un premier modèle cartographique 6, le module d'asservissement 42 bascule dans un asservissement sur une seconde consigne d'orientation associée à un second modèle cartographique 6 seulement si, durant un certain temps, seul le second modèle cartographique 6 est rapproché des cartographies 5 successives issues de l'observation. Autrement dit, le module d'asservissement 42 met en place une temporisation pour effectuer un changement d'orientation, de sorte qu'il faut que le deuxième modèle cartographique 6 soit rapproché des cartographies 5 suffisamment longtemps pour que le module d'asservissement 42 suive la seconde consigne d'orientation.

Le temps minimum de cette temporisation dépend de l'horaire, de l'écart angulaire entre la première consigne d'orientation et la seconde consigne d'orientation, d'un taux d'usure d'organes mécaniques du suiveur solaire 1 sollicités lors d'un changement d'orientation du suiveur solaire 1, et d'une consommation d'énergie nécessaire pour modifier l'orientation du suiveur solaire.

Bien entendu l'exemple de mise en œuvre évoqué ci-dessus ne présente aucun caractère limitatif et d'autres améliorations et détails peuvent être apportés au suiveur solaire selon l'invention, sans pour autant sortir du cadre de l'invention où d'autres types de structure fixe ou de plateforme peuvent par exemple être réalisés.

## Revendications

1. Procédé de pilotage de l'orientation d'un suiveur solaire (1) mono-axe orientable autour d'un axe de rotation (A), ledit procédé accomplissant de manière répétitive des phases de pilotage successives, où chaque phase de pilotage met en œuvre les étapes successives suivantes:

   a) observer la couverture nuageuse au-dessus du suiveur solaire (1) mono-axe;
   b) comparer la couverture nuageuse observée (5) avec des modèles de couverture nuageuse (6) archivés dans une base de données (44), chaque modèle de couverture nuageuse (6) étant associé à une consigne d'orientation du suiveur solaire (1) mono-axe;
   c) rapprochement de la couverture nuageuse observée (5) avec un modèle de couverture nuageuse (6);
   d) asservir l'orientation du suiveur solaire (1) mono-axe en appliquant la consigne d'orientation associée audit modèle de couverture nuageuse (6) retenu lors de l'étape c);

   dans lequel les modèles de couverture nuageuse (6) comprennent:

   - au moins un modèle dit de couverture nuageuse nulle auquel est associée une consigne d'orientation sur un angle d'inclinaison dit direct établi par un calcul astronomique de la position du soleil; et
   - au moins un modèle dit de grande couverture nuageuse auquel est associée une consigne d'orientation sur un angle d'inclinaison dit optimisé qui ne coïncide pas avec l'angle d'inclinaison direct; et

   dans lequel les modèles de couverture nuageuse (6) sont constitués de modèles cartographiques.

2. Procédé selon la revendication 1, dans lequel chaque modèle de couverture nuageuse (6) associe une consigne d'orientation qui est fonction d'une composition de la couche nuageuse dudit modèle.

3. Procédé selon la revendication 2, dans lequel ladite composition dépend de l'un au moins des paramètres suivants: nombre de nuages, surface couvrante du ou des nuages, épaisseur du ou des nuages, localisation du ou des nuages, type du ou des nuages.

4. Procédé selon l'une quelconque des revendications précédentes, dans lequel l'angle d'inclinaison optimisé correspond à un angle associé à une mise à l'horizontal du suiveur solaire.

5. Procédé selon l'une quelconque des revendications précédentes, dans lequel les modèles de couverture nuageuse (6) comprennent au moins un modèle dit de fine couverture nuageuse auquel est associée une consigne d'orientation sur un angle intermédiaire prédéfini entre l'angle d'inclinaison direct et un angle correspondant à une mise à l'horizontal du suiveur solaire.

6. Procédé selon l'une quelconque des revendications précédentes, dans lequel les modèles de couverture nuageuse (6) comprennent au moins un modèle dit de couverture nuageuse irrégulière auquel est associée une consigne d'orientation sur l'angle d'inclinaison direct.

7. Procédé selon l'une quelconque des revendications précédentes, dans lequel, lors de l'étape a), l'observation de la couverture nuageuse est traduite en une cartographie (5) de la luminance solaire en fonction de différents angles d'élévation (Θi) et, lors de l'étape b) la comparaison est basée sur une comparaison entre la répartition de la luminance solaire sur la cartographie avec la répartition de la luminance solaire dans les différents modèles cartographiques (6).

8. Procédé selon les revendications précédentes, dans lequel, en considérant une valeur maximale de luminance solaire correspondant à la valeur maximale de la luminance solaire accessible lors d'une observation en rayonnement direct:

- le modèle de couverture nuageuse nulle correspond à un modèle cartographique où la luminance solaire est au moins égale à 80 % de la valeur maximale sur un secteur angulaire inférieur à 30 degrés autour de l'angle d'inclinaison direct; et
- le modèle de grande couverture nuageuse correspond à un modèle cartographique où la luminance solaire présente, sur un secteur angulaire supérieur à 150 degrés, une valeur basse et une valeur haute, avec un écart entre la valeur basse et la valeur haute qui est inférieur à 50 % de la valeur haute, avec la valeur haute qui est inférieure à 50 % de la valeur maximale et avec la valeur haute qui est associé à un angle d'élévation éloigné d'au moins 20 degrés de l'angle d'inclinaison direct.

9. Procédé selon les revendications 5 et 8, dans lequel le modèle de fine couverture nuageuse correspond à un modèle cartographique où la luminance solaire présente, sur un secteur angulaire supérieur à 150 degrés, une valeur basse et une valeur haute, avec un écart entre la valeur basse et la valeur haute qui est inférieur à 50 % de la valeur haute et avec la valeur haute qui est associé à un angle d'élévation situé à moins de 20 degrés de l'angle d'inclinaison direct.

10. Procédé selon les revendications 6 et 9, dans lequel le modèle de couverture nuageuse irrégulière correspond à un modèle cartographique où la luminance solaire est au moins égale à 50 % de la valeur maximale sur un secteur angulaire inférieur à 30 degrés autour de l'angle d'inclinaison direct, et est au moins égale à 20 % de la valeur maximale sur un secteur angulaire inférieur à 30 degrés autour d'un autre angle d'inclinaison.

11. Procédé selon l'une quelconque des revendications précédentes, dans lequel l'observation de la couverture nuageuse est réalisée selon l'une des méthodes suivantes:

- prise d'images du ciel à partir du sol au moyen d'un appareil de prise de vue, tel qu'une caméra;
- mesure de la luminance solaire à partir du sol au moyen d'un ensemble de plusieurs cellules photosensibles;
- récupération d'images satellites du ciel au-dessus du suiveur solaire (1).

12. Procédé selon l'une quelconque des revendications précédentes, dans lequel, lors de l'étape a), est mise en œuvre une étape de pondération fréquentielle appliquée sur l'observation qui est fonction à la fois d'une réponse en fréquence de l'observation et d'une bande fréquentielle utile a un capteur solaire.

13. Procédé de pilotage selon l'une quelconque des revendications précédentes, dans lequel, si lors d'une série comprenant un nombre prédéfini de phases de pilotage successives où, lors de chaque phase de pilotage, aucun modèle de couverture nuageuse de la base de données n'est rapproché de la couverture nuageuse observée, alors le procédé bascule dans un asservissement sur un angle d'inclinaison direct.

14. Suiveur solaire (1) mono-axe orientable autour d'un axe de rotation (A), du type comprenant une structure fixe (11) d'ancrage au sol et une plateforme (12) propre à supporter au moins un capteur solaire (13), ladite plateforme (12) étant actionnable en rotation sur la structure fixe (11) selon ledit axe de rotation (A) au moyen d'un système d'actionnement (3), ledit suiveur solaire (1) étant **caractérisé en ce qu'**il comprend en outre:

- un système d'observation (2) de la couverture nuageuse au-dessus du suiveur solaire (1),
- une base de données (44) archivant des modèles de couverture nuageuse (6) associés chacun à une consigne d'orientation du suiveur solaire (1), et
- une unité de contrôle (4) en liaison avec le système d'observation (2) pour recevoir ses données d'observations, avec la base de données (44) et avec le système d'actionnement (3) pour piloter la rotation de la plateforme (12), où ladite unité de contrôle (4) est conformé pour mettre en œuvre les étapes b) à d) du procédé de pilotage conforme à l'une quelconque des revendications précédentes;

dans lequel les modèles de couverture nuageuse (6) comprennent:

- au moins un modèle dit de couverture nuageuse nulle auquel est associée une consigne d'orientation sur un angle d'inclinaison dit direct établi par un calcul astronomique de la position du soleil; et
- au moins un modèle dit de grande couverture nuageuse auquel est associée une consigne d'orientation sur un angle d'inclinaison dit optimisé qui ne coïncide pas avec l'angle d'inclinaison direct; et

dans lequel les modèles de couverture nuageuse (6) sont constitués de modèles cartographiques.

**Patentansprüche**

1. Verfahren zur Steuerung der Ausrichtung eines einachsigen solaren Folgeelementes (1), das um eine Drehachse (A) herum ausrichtbar ist, wobei das Verfahren aufeinanderfolgende Steuerungsphasen wiederholt ausführt, wobei jede Steuerungsphase die folgenden aufeinanderfolgenden Schritte umsetzt:

a) Beobachten der Wolkenbedeckung über dem einachsigen solaren Folgeelement (1);
b) Vergleichen der beobachteten Wolkenbedeckung (5) mit Modellen für die Wolkenbedeckung (6), welche in einer Datenbank (44) archiviert sind, wobei jedes Modell der Wolkenbedeckung (6) einem Ausrichtungssollwert des einachsigen solaren Folgeelementes (1) zugeordnet ist;
c) Annähern an die beobachtete Wolkenbedeckung (5) mit einem Modell der Wolkenbedeckung (6);

d) Steuern der Ausrichtung des einachsigen solaren Folgeelementes (1), indem man den Ausrichtungssollwert, welcher dem Modell der Wolkenbedeckung (6) zugeordnet ist, das während dem Schritt c) zurückbehalten wurde, anwendet;

wobei die Modelle der Wolkenbedeckung (6) Folgendes umfassen:

- mindestens ein Modell mit null Wolkenbedeckung, welchem ein Ausrichtungssollwert auf einem Neigungswinkel zugeordnet ist, welcher direkt durch eine astronomische Berechnung der Position der Sonne festgelegt ist; und
- mindestens ein Modell mit erheblicher Wolkenbedeckung, welchem ein Ausrichtungssollwert auf einem optimierten Neigungswinkel zugeordnet ist, welcher nicht mit dem direkten Neigungswinkel übereinstimmt; und

wobei die Modelle der Wolkenbedeckung (6) aus kartographischen Modellen (6) bestehen.

2. Verfahren nach Anspruch 1, wobei jedem Modell der Wolkenbedeckung (6) ein Ausrichtungssollwert zugeordnet ist, welcher eine Funktion einer Zusammensetzung der Wolkenbedeckung des Modells ist,

3. Verfahren nach Anspruch 2, wobei die besagte Zusammensetzung von mindestens einem der folgenden Parameter abhängt: Anzahl der Wolken, der Oberfläche, die von der Wolke oder den Wolken bedeckt ist und der Dicke der Wolke(n), dem Ort, an dem sich die Wolke(n) befindet/befinden; Art der Wolke(n).

4. Verfahren nach einem der vorherigen Ansprüche, wobei der optimierte Neigungswinkel einem Winkel entspricht, welcher einer horizontalen Ausrichtung des solaren Folgeelementes zugeordnet ist.

5. Verfahren nach einem der vorherigen Ansprüche, wobei die Modelle der Wolkenbedeckung (6) mindestens ein Modell mit geringer Wolkenbedeckung umfassen, welchem ein Ausrichtungssollwert auf einem Zwischenwinkel zugeordnet ist, welcher zwischen dem direkten Neigungswinkel und einem Winkel vordefiniert ist, der einer horizontalen Ausrichtung des solaren Folgeelementes entspricht.

6. Verfahren nach einem der vorherigen Ansprüche, wobei die Modelle der Wolkenbedeckung (6) mindestens ein Modell mit unregelmäßiger Wolkenbedeckung umfassen, welchem ein Ausrichtungssollwert auf einem direkten Neigungswinkel zugeordnet ist.

**7.** Verfahren nach einem der vorherigen Ansprüche, wobei während dem Schritt a) das Beobachten der Wolkenbedeckung in eine Kartierung (5) der solaren Leuchtdichte gemäß den verschiedenen Anhebungswinkeln (Θi) übersetzt wird und, während dem Schritt b) der Vergleich auf einem Vergleich zwischen der Verteilung der solaren Leuchtdichte auf der Kartierung mit der Verteilung der solaren Leuchtdichte in den verschiedenen kartographischen Modellen (6) basiert.

**8.** Verfahren nach einem der vorherigen Ansprüche, wobei unter Berücksichtigung eines maximalen solaren Leuchtdichtewertes, welcher dem maximalen solaren Leuchtdichtewert entspricht, der während einer Beobachtung bei direkter Strahlung zugänglich ist:

- das Modell mit null Wolkenbedeckung einem kartographischen Modell entspricht, in welchem die solare Leuchtdichte mindestens gleich 80 % des maximalen Wertes auf einem winkelförmigen Abschnitt kleiner 30 Grad um den direkten Neigungswinkel herum ist; und
- das Modell mit erheblicher Wolkenbedeckung einem kartographischem Modell entspricht, in welchem die solare Leuchtdichte auf einem winkelförmigen Abschnitt größer als 150 Grad einen niedrigen Wert und einen hohen Wert darstellt, mit einem Abstand zwischen dem niedrigen Wert und dem hohen Wert, der um 50 % geringer als der hohe Wert ist, wobei der hohe Wert um 50 % geringer als der maximale Wert ist und wobei der hohe Wert einem Anhebungswinkel zugeordnet ist, der um mindestens 20 Grad vom direkten Neigungswinkel entfernt ist.

**9.** Verfahren nach den Ansprüchen 5 und 8, wobei das Modell mit geringer Wolkenbedeckung einem kartographischem Modell entspricht, in welchem die solare Leuchtdichte auf einem winkelförmigen Abschnitt größer als 150 Grad einen niedrigen Wert und einen hohen Wert darstellt, mit einem Abstand zwischen dem niedrigen Wert und dem hohen Wert, der um 50 % geringer als der hohe Wert ist, wobei der hohe Wert um 50 % geringer als der hohe Wert ist und wobei der hohe Wert einem Anhebungswinkel zugeordnet ist, der um mindestens 20 Grad vom direkten Neigungswinkel entfernt ist.

**10.** Verfahren nach den Ansprüchen 6 und 9, wobei das Modell mit unregelmäßiger Wolkenbedeckung einem kartographischen Modell entspricht, in welchem die solare Leuchtdichte mindestens gleich 50 % des maximalen Wertes auf einem winkelförmigen Abschnitt kleiner 30 Grad um den direkten Neigungswinkel herum ist und mindestens gleich 20 % des maximalen Wertes auf einem winkelförmigen Abschnitt kleiner als 30 Grad um einen anderen Neigungswinkel herum ist.

**11.** Verfahren nach einem der vorhergehenden Ansprüche, wobei die Beobachtung der Wolkenbedeckung nach einer der folgenden Vorgehensweisen ausgeführt wird:

- Aufnehmen von Bildern des Himmels vom Boden aus mittels eines Aufnahmegerätes, wie beispielsweise einer Kamera;
- Messen der solaren Lichtdichte vom Boden aus mittels einer Anordnung von mehreren lichtempfindlichen Zellen;
- Abruf von Satellitenbildern vom Himmel über dem solaren Folgeelement (1).

**12.** Verfahren nach einem der vorhergehenden Ansprüche, wobei während Schritt a), ein Schritt der fortlaufenden Bewertung auf die Beobachtung angewendet wird, welche gleichzeitig von einer Reaktion auf die Häufigkeit der Beobachtung und einem Frequenzband abhängt, das für einen Solarkollektor geeignet ist.

**13.** Verfahren zur Steuerung nach einem der vorhergehenden Ansprüche, wobei, wenn während einer Serie, welche eine vordefinierte Anzahl von aufeinanderfolgenden Steuerungsphasen umfasst, in denen, während jeder Steuerungsphase, kein Modell der Wolkenbedeckung der Datenbasis an die beobachtete Wolkenbedeckung angenähert wird, das Verfahren daher in eine Steuerung auf einen direkten Neigungswinkel wechselt.

**14.** Einachsiges solares Folgeelement (1), das um eine Drehachse (A) herum orientierbar ist, wobei das solare Folgeelement (1) dafür konfiguriert ist, um das Verfahren eines der vorhergehenden Ansprüche umzusetzen, wobei das solare Folgeelement (1) ein Folgeelement des Typs ist, der eine feste Struktur (11) der Verankerung im Boden und eine Plattform (12) umfasst, die geeignet ist, um mindestens einen Solarkollektor (13) zu tragen, wobei die Plattform (12) in Drehung auf der festen Struktur (11) gemäß der Drehachse (A) mittels eines Betätigungssystems (3) betätigbar ist, wobei das solare Folgeelement (1) **dadurch gekennzeichnet ist, dass** es außerdem Folgendes umfasst:

- ein Beobachtungssystem (2) der Wolkenbedeckung über dem solaren Folgeelement (1),
- eine Datenbank (44), welche Modelle der Wolkenbedeckung (6) archiviert, welche jeweils einem Ausrichtungssollwert des solaren Folgeelementes (1) zugeordnet sind, und
- eine Kontrolleinheit (4), welche mit dem Beobachtungssystem (2) verbunden ist, um dessen Beobachtungsdaten zu empfangen und welche mit der Datenbank (44) und mit dem Betätigungssystem (3) verbunden ist, um die Drehung der Plattform (12) zu steuern, in welcher die Kontrolleinheit (4) dafür vorgesehen ist, die Schritte b) bis d) des Verfahrens zur Steuerung umzusetzen;

wobei die Modelle der Wolkenbedeckung (6) Folgendes umfassen:

- mindestens ein Modell mit null Wolkenbedeckung, welchem ein Ausrichtungssollwert auf einem Neigungswinkel zugeordnet ist, welcher direkt durch eine astronomische Berechnung der Position der Sonne festgelegt ist; und
- mindestens ein Modell mit erheblicher Wolkenbedeckung, welchem ein Ausrichtungssollwert auf einem optimierten Neigungswinkel zugeordnet ist, welcher nicht mit dem direkten Neigungswinkel übereinstimmt; und

wobei die Modelle der Wolkenbedeckung (6) aus kartographischen Modellen (6) bestehen.

## Claims

1. Method for controlling the orientation of a single-axis solar tracker (1) orientable about an axis of orientation (A), wherein the method repetitively completes successive control phases, wherein each control phase implements the following successive steps:

   a) observing the cloud coverage above the single-axis solar tracker (1);
   b) comparing the observed cloud coverage (5) with cloud coverage models (6) stored in a database (44), wherein each cloud coverage model (6) is associated to an orientation setpoint value for the single-axis solar tracker (1);
   c) matching the observed cloud coverage (5) with a cloud coverage model (6);
   d) controlling the orientation of the single-axis solar tracker (1) by applying the orientation setpoint value associated to the cloud coverage model (6) retained during step c);

   wherein the cloud coverage models (6) comprise the following:

   - at least one so-called zero-cloud coverage model, to which an orientation setpoint value is associated on a so-called direct inclination angle, which is established by an astronomical calculation of the position of the Sun; and
   - at least one so-called widespread cloud coverage model, to which an orientation setpoint value is associated on a so-called optimized inclination angle, which does not coincide with the direct inclination angle; and

   wherein the cloud coverage models are constituted by cartographic models (6).

2. Method according to claim 1, wherein each cloud coverage model (6) is associated to an orientation setpoint value, which depends on a composition of the cloud layer of the model.

3. Method according to claim 2, wherein the composition depending on at least one of the following parameters: number of clouds, coverage surface of the cloud(s), thickness of the cloud(s), location of the cloud(s), type of the cloud(s).

4. Method according to any one of the preceding claims, wherein the optimized inclination angle corresponds to an angle associated to a horizontal setting of the solar tracker.

5. Method according to any one of the preceding claims, wherein the cloud coverage models (6) comprise at least one so-called fine cloud coverage model, to which an orientation setpoint value is associated on a predefined intermediate angle between the direct inclination angle and an angle corresponding to a horizontal setting of the solar tracker.

6. Method according to any one of the preceding claims, wherein the cloud coverage models (6) comprise at least one so-called irregular cloud coverage model, to which an orientation setpoint value is associated on the direct inclination angle.

7. Method according to any one of the preceding claims, wherein during step a), the observation of the cloud coverage is translated into a mapping (5) of the solar luminance according to different elevation angles ($\theta i$) and, during step b) the comparison is based on a comparison between the distribution of the solar luminance on the mapping with the distribution of the solar luminance in the different cartographic models (6).

8. Method according to any one of the preceding claims, wherein, considering a maximum solar luminance value, which corresponds to the maximum value of the solar luminance accessible during a direct radiation observation:

   - the zero-cloud coverage model corresponds to a cartographic model wherein the solar luminance is at least equal to 80% of the maximum value within an angular sector lower than 30 degrees around the direct inclination angle; and

- the widespread cloud coverage model corresponds to a cartographic model wherein the solar luminance has, within an angular sector greater than 150 degrees, a low value and a high value, with a difference between the low value and the high value which is lower than 50% of the high value, wherein the high value is lower than 50% of the maximum value and wherein the high value is associated to an elevation angle deviated by at least 20 degrees from the direct inclination angle.

9. Method according to claims 5 and 8, wherein the fine cloud coverage model corresponds to a cartographic model where the solar luminance has, within an angular sector larger than 150 degrees, a low value and a high value, with a difference between the low value and the high value which is lower than 50% of the high value and with the high value which is associated to an elevation angle located at less than 20 degrees from the direct inclination angle.

10. Method according to claims 6 and 9, wherein the irregular cloud coverage model corresponds to a cartographic model where the solar luminance is at least equal to 50% of the maximum value within an angular sector smaller than 30 degrees around the direct inclination angle, and is at least equal to 20% of the maximum value within an angular sector smaller than 30 degrees around another inclination angle.

11. Method according to any one of the preceding claims, wherein the observation of the cloud coverage is carried out according to any of the following methods:

  - sky images pickup from the ground by means of an image pickup apparatus, such as a camera;
  - measurement of the solar luminance from the ground by means of a set of several photosensitive cells;
  - recovery of satellite images from the sky above the solar tracker (1).

12. Method according to any one of the preceding claims, wherein, during step a), there is implemented a step of frequency weighting applied on the observation which depends on both a frequency response of the observation and on a frequency band useful for a solar collector.

13. Method for controlling according to any one of the preceding claims, wherein, if during a series comprising a predefined number of successive control phases where, during each control phase, no cloud coverage model of the database is matched with the observed cloud coverage, therefore the method switches into a control on a direct inclination angle.

14. Single-axis solar tracker (1) orientable about an axis of rotation (A), wherein the solar tracker (1) is configured to perform the method according to any of the preceding claims, wherein the solar tracker (1) is of the type comprising a fixed structure (11) for anchorage to the ground and a platform (12) capable of supporting at least one solar collector (13), said platform (12) being rotatably actuatable on the fixed structure (11) about said axis of rotation (A) by means of an actuation system (3), said solar tracker (1) being **characterized in that** it further comprises:

  - a system (2) for observing the cloud coverage above the solar tracker (1),
  - a database (44) storing cloud coverage models (6) each associated to an orientation setpoint value for the solar tracker (1), and
  - a control unit (4) linked to the observation system (2) to receive its observation data, to the database (44) and to the actuation system (3) to control the rotation of the platform (12), where said control unit (4) is configured to implement the steps b) to d) of the method for controlling;

wherein the cloud coverage models (6) comprise the following:

  - at least one so-called zero-cloud coverage model, to which an orientation setpoint value is associated on a so-called direct inclination angle, which is established by an astronomical calculation of the position of the Sun; and
  - at least one so-called widespread cloud coverage model, to which an orientation setpoint value is associated on a so-called optimized inclination angle, which does not coincide with the direct inclination angle; and

wherein the cloud coverage models are constituted by cartographic models (6).

**Fig. 1**

**Fig. 2**

*Fig. 3*

| | B1 | B2 | B3 | B4 | B5 | B6 |
|---|---|---|---|---|---|---|

2a

22

*Fig. 4*

| 5a | 50% | 90% | 85% | 60% | 50% | 2% |
|---|---|---|---|---|---|---|
| | 50(1) | 50(2) | 50(3) | 50(4) | 50(5) | 50(6) |

*Fig. 5*

Fig. 6

Fig. 7a

Fig. 7b

Fig. 8

Fig. 9

Fig. 10

Fig. 11

*Fig. 12*

*Fig. 13*

**RÉFÉRENCES CITÉES DANS LA DESCRIPTION**

**Documents brevets cités dans la description**

- US 2007084502 A1
- DE 202011104051 U1
- US 2013256506 A1